# EUROPÄISCHE PATENTSCHRIFT

(11) **EP 3 807 943 B1**
(45) Veröffentlichungstag und Bekanntmachung des Hinweises auf die Patenterteilung: **06.03.2024**
(21) Anmeldenummer: 19801737.8
(22) Anmeldetag: 30.10.2019
(51) Int. Cl.: B60L 50/64, B62D 21/15, B62D 25/20, H01M 50/249, B60K 1/04

(54) **KRAFTFAHRZEUG MIT KOPPELELEMENT**
MOTOR VEHICLE WITH COUPLING ELEMENT
VÉHICULE À MOTEUR À ÉLÉMENT D'ACCOUPLEMENT

(30) Priorität: 05.11.2018 DE 102018218789
(43) Veröffentlichungstag der Anmeldung: 21.04.2021
(73) Patentinhaber: Audi AG, 85045 Ingolstadt (DE)
(72) Erfinder: URBAN, Tobias, 74354 Besigheim-Ottmarsheim (DE); MILDE, Thomas, 71543 Wüstenrot (DE); WILDE, Hans-Dieter, verstorben (DE); RÖCKER, Jochen, 71563 Affalterbach (DE); WEIGERT, Daniel, 80333 München (DE); GOLD, Carlo, 74196 Neuenstadt am Kocher (DE)
(86) Internationale Anmeldenummer: PCT/EP2019/079724
(87) Internationale Veröffentlichungsnummer: WO 2020/094487

(56) Entgegenhaltungen:
- EP-A1- 2 505 459
- EP-B1- 2 505 459
- CN-U- 207 191 175
- DE-A1-102010 033 123
- DE-A1-102012 019 922

## Beschreibung

Die Erfindung betrifft ein Kraftfahrzeug umfassend eine Karosserie mit zwei Karosserielängsträgern sowie wenigstens eine zwischen den Karosserielängsträgern angeordneten Batterie mit einem Batteriegehäuse umfassend zwei Batteriegehäuselängsträger.

Teil- oder vollelektrisch fahrende Fahrzeuge weisen eine oder mehrere Batterien auf, die üblicherweise karosserieseitig unterhalb des Karosseriebodens verbaut sind. Sie befindet sich üblicherweise zwischen zwei Karosserielängsträgern, zu denen hin sie abgestützt ist. Hierzu ist das Batteriegehäuse mit seinen beiden Batteriegehäuselängsträgern mit den Karosserielängsträgern gekoppelt respektive verbunden. Über diese Abstützung wird die Batterie respektive werden die Energiespeicher bei einem Unfall mit Seitenaufprall geschützt, da etwaige Kräfte zunächst von dem Seitenschweller aufgefangen werden und ansonsten über das Batteriegehäuse aufgenommen und weitergeleitet werden. Die DE 10 2010 033123 A1 zeigt z.B. ein das Batteriegehäuse mit einem Längsträger verbindendes Bauteil.

Um eine möglichst gute Anbindung respektive Abstützung zu erzielen, ist eine möglichst großflächige Anlage der Batteriegehäuselängsträger an den Karosserielängsträgern erforderlich. Aufgrund der spezifischen Geometrie der Karosserielängsträger, die im Hinblick auf die Crashkinematik entsprechend ausgelegt sind, ergeben sich im Anbindungsbereich entsprechend spezifische Karosserielängsträgerformen, was dazu führt, dass auch die Batteriegehäuselängsträger entsprechend geometrisch auszulegen sind, um diese Form zumindest teilweise aufzunehmen beziehungsweise abzubilden. Da die Geometrie der Karosserielängsträger typenspezifisch ist und von Fahrzeugtyp zu Fahrzeugtyp sich ändern kann, führt dies dazu, dass quasi für jeden Fahrzeugtyp spezifische Batteriegehäuse vorzuhalten sind, deren Batteriegehäuselängsträger entsprechend geometrisch ausgebildet sind, um eine optimale Abstützung respektive Anbindung zu erreichen.

Der Erfindung liegt das Problem zugrunde, ein demgegenüber verbessertes Kraftfahrzeug anzugeben.

Zur Lösung dieses Problems ist bei einem Kraftfahrzeug der eingangs genannten Art erfindungsgemäß vorgesehen, dass zwischen den Batteriegehäuselängsträgern und den Karosserielängsträgern jeweils wenigstens ein die beiden Längsträger koppelndes Koppelelement angeordnet ist.

Bei dem erfindungsgemäßen Kraftfahrzeug ist das Batteriegehäuse nicht mehr unmittelbar an den Karosserielängsträgern angebunden, vielmehr ist zwischen dem jeweiligen Karosserielängsträger und dem Batteriegehäuselängsträger ein Koppelelement angeordnet, das beide verbindet. Dieses Koppelelement weist an der zum Karosserielängsträger weisenden Seite zwangsläufig eine entsprechend der Geometrie des Karosserielängsträgers ausgelegte Form aus, um eine optimale Anbindung beziehungsweise Abstützung zum Karosserielängsträger sicherzustellen. An der zum jeweiligen Batteriegehäuselängsträger weisenden Seite jedoch kann das Koppelelement eine einfache, quasi standardisierte respektive für mehrere Fahrzeugtypen gleiche Form respektive Geometrie aufweisen, was es erlaubt, auch die Batteriegehäuse respektive die Batteriegehäuselängsträger dementsprechend einfach in der Trägergeometrie auszuführen und insbesondere für Batteriegehäuse für mehrere Fahrzeugtypen gleiche Batteriegehäuse respektive Batteriegehäuselängsträger einzusetzen. Das heißt, dass erfindungsgemäß das Koppelelement letztlich die Schnittstellengeometrie des Batteriegehäuses definiert, nicht aber die Karosserielängsträger.

Ebenso ist es natürlich möglich, auch unterschiedliche Batteriegehäuse respektive Batteriegehäuse mit unterschiedlich geformten Batteriegehäuselängsträgern an unterschiedlichen Karosserielängsträgergeometrien zu verbauen. Denn dadurch, dass das Koppelelement die Schnittstelle einerseits zum Karosserielängsträger, andererseits zum Batteriegehäuselängsträger bildet, kann durch das Koppelelement eine Montage auch eines Batteriegehäuses erfolgen, dessen Längsträgergeometrie ursprünglich nicht zur Karosserielängsträgergeometrie passt, was aber über die entsprechende Ausgestaltung der Koppelelementform ermöglicht wird. Denn die eine Seite des Koppelelements ist entsprechend der Karosserielängsträgergeometrie ausgeformt, die andere Seite entsprechend der Batteriegehäuselängsträgergeometrie, so dass die ursprünglich nicht koppelbaren Geometrien doch verbunden werden können. Nachdem die unterschiedlichen Geometrien der Karosserielängsträger der verschiedenen Typen innerhalb einer Fahrzeugpalette ebenso bekannt sind wie die Geometrien der Batteriegehäuselängsträger der verschiedenen Batteriegehäuse, die innerhalb der Modellpalette verbaut werden können, ist es ohne weiteres möglich, durch Vorhaltung mehrerer, unterschiedliche Geometriekombinationen seitens der beiden zu koppelnden Längsträger aufnehmenden respektive abbildenden Koppelelemente die in Verbindung unterschiedlicher Batteriegehäuse zu entsprechenden, verschiedenartigen Karosserielängsträgern zu ermöglichen. Das heißt, dass der Verbau unterschiedlicher Batteriegehäuse allein über die Varianz des zu verwendenden Koppelelements ermöglicht wird. Irgendwelche formgeberischen Eingriffe im Bereich der zu verbindenden Längsträger sind daher nicht erforderlich.

Das heißt, dass das erfindungsgemäße Koppelsystem demzufolge sowohl die Möglichkeit bietet, typenübergreifend von der Geometrie her Batteriegehäuse mit geometrisch gleichen Batteriegehäuselängsträgern in Karosserien mit von der Geometrie her unterschiedlichen Karosserielängsträgern zu verbauen, wie auch die Möglichkeit gegeben ist, Batteriegehäuse mit von der Geometrie her unterschiedlichen Batteriegehäuselängsträgern in Karosserien mit geometrisch gleicher oder ebenfalls variierenden Karosserielängsträgern zu montieren und jeweils optimale Abstützungs- respektive Anbindungsverhältnisse zu schaffen.

Das Koppelelement selbst ist gemäß einer ersten Erfindungsalternative bevorzugt länglich ausgeführt, es ist also trägerartig und verläuft parallel zu den beiden Längsträgern. Es sollte zumindest so lang wie der jeweilige Batteriegehäuselängsträger sein, so dass das Batteriegehäuse über seine gesamte Länge komplett am jeweiligen Koppelelement anliegt respektive daran abgestützt ist.

Alternativ dazu besteht die Möglichkeit, relativ kurze Koppelelemente zu verwenden, so dass im Bereich zwischen den beiden zu koppelnden Längsträgern jeweils mehrere Koppelelemente vorgesehen sind, z. B. zwei, drei oder vier Koppelelemente, die über die Länge des Batteriegehäuses verteilt sind. Es ist also eine Anbindung an mehreren Stellen vorgesehen. Dies spart insbesondere Gewicht, da die mehreren, kürzeren Koppelelemente etwas leichter sind als ein einteiliges langes trägerartiges Koppelelement.

Das oder die Koppelelemente der jeweiligen Batteriegehäuselängsträger, wie natürlich auch der jeweilige Karosserielängsträger, greifen erfindungsgemäß formschlüssig ineinander, so dass sich eine möglichst große Anlagebeziehungsweise Abstützfläche ergibt. Bevorzugt weist das oder weisen die Koppelelemente und/oder der jeweilige Batteriegehäuselängsträger einen im Wesentlichen L-förmigen Querschnitt auf, so dass eine Abstützung respektive Anlage an wenigstens zwei unter einem Winkel zueinanderstehenden Flächen gegeben ist.

Eine besonders zweckmäßige Weiterbildung der Erfindung sieht vor, dass das oder jedes Koppelelement eine Gleitschrägfläche aufweist, die benachbart zu einer am Batteriegehäuselängsträger ausgebildeten Gleitschrägfläche liegt. Das oder die Koppelelemente sind üblicherweise am Karosserielängsträger befestigt. Kommt es bei einem Seitenaufprall zu einer Deformation des Karosserielängsträgers, so wird der Längsträger nach innen in Richtung Fahrzeugmitte bewegt, mithin auch das oder die Koppelelemente. Gemäß dieser Erfindungsausgestaltung sind an dem oder den Koppelelementen entsprechende Gleitschrägflächen vorgesehen, die jeweiligen zugeordneten Batteriegehäuselängsträger weisen ebenfalls entsprechende Gleitflächen auf. Im Rahmen der Deformation des Karosserielängsträgers laufen nun die Gleitschrägflächen des oder der Koppelelemente auf die Gleitschrägflächen des Batteriegehäuselängsträgers auf. Da die Batteriegehäuselängsträger nicht fest mit dem jeweiligen Koppelelement verbunden sind, sondern über entsprechende Verbindungen am Unterboden der Karosserie befestigt. Durch das Auflaufen der Gleitschrägfläche des oder der Koppelelemente und einer fortgesetzten Bewegung der Koppelelemente aufgrund der Deformation des Karosserielängsträgers kommt es nun dazu, dass der Batteriegehäuselängsträger und damit das Batteriegehäuse eine vertikal nach unten gerichtete Kraftkomponente erfährt, mithin also nach unten weggedrückt wird. Das heißt, dass über diese Gleitschrägflächenkombination eine gezielte Relativbewegung des Batteriegehäuses relativ zur Karosserie im Crashfall erreicht wird, so dass eine weitere Schutzfunktion im Bereich dieser Schnittstelle geschaffen werden kann.

Das oder jedes Koppelelement kann aus Metall sein, insbesondere aus Aluminium. Alternativ kann auch ein Koppelelement aus einem Kunststoff, insbesondere einem faserverstärken Kunststoff oder einem Kompositwerkstoff verwendet werden.

Weitere Vorteile und Einzelheiten der Erfindung ergeben sich aus den im Folgenden beschriebenen Ausführungsbeispiel sowie anhand der Zeichnungen. Dabei zeigen.
- Fig. 1: eine Prinzipdarstellung einer Teilansicht eines erfindungsgemäßen Kraftfahrzeugs unter Darstellung eines Karosserielängsträgers, eines Koppelelements und eines Batteriegehäuselängsträgers in einer ersten Ausführungsform,
- Fig. 2: die Anordnung aus Fig. 1 in einer zweiten Ausführungsform,
- Fig. 3: die Anordnung aus in einer dritten Ausführungsform,
- Fig. 4: die Anordnung in einer vierten Ausführungsform, und
- Fig. 5: die Anordnung aus Fig. 3 vor (linke Darstellung) und nach (rechte Darstellung) einem Seitenaufprall.

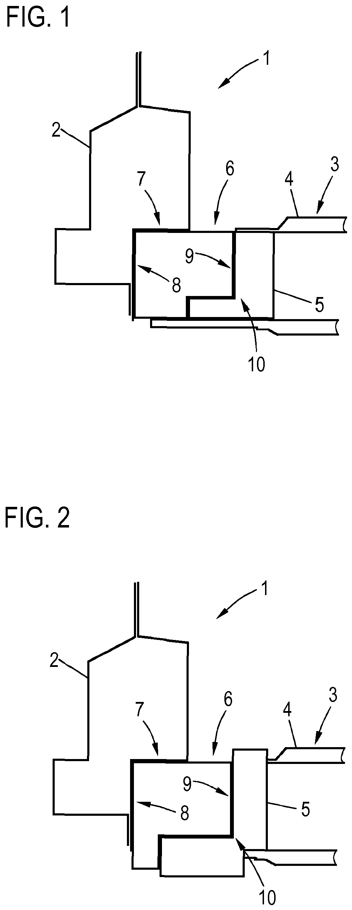

Fig. 1 zeigt eine Teilansicht eines erfindungsgemäßen Kraftfahrzeugs 1, wobei von dem Kraftfahrzeug 1 nur ein Karosserielängsträger 2 dargestellt ist. Benachbart zu diesem ist eine Batterie 3 mit einem Batteriegehäuse 4 umfassend einen hier gezeigten Batteriegehäuselängsträger 5 gezeigt. Selbstverständlich weist das Kraftfahrzeug zwei parallel laufende seitliche Karosserielängsträger auf, wie natürlich auch das Batteriegehäuse 4 zwei gegenüberliegende Batteriegehäuselängsträger 5 aufweist.

Zur Anbindung des Batteriegehäuses 4 an den jeweiligen Karosserielängsträger 2 ist erfindungsgemäß ein Koppelelement 6 vorgesehen, bei dem es sich um ein Metallbauteil, insbesondere aus Aluminium, oder ein Kunststoffbauteil, insbesondere aus einem faserverstärkten Kunststoff oder ein Kompositbauteil handeln kann. Dieses Koppelelement 6 dient dazu, den jeweiligen Batteriegehäuselängsträger 5 an den Karosserielängsträger 2 anzubinden respektive daran abzustützen. In der Montagestellung ist es am Karosserielängsträger 2 befestigt, der Batteriegehäuselängsträger liegt an ihm an und ist entweder über einfache Befestigungselemente mit ihm verbunden, oder ist an ihm selbst nicht befestigt.

Der Karosserielängsträger 2 weist eine Aufnahmegeometrie 7 auf, die im gezeigten Beispiel exemplarisch eine rechtwinklige, längslaufende Aufnahme ist. Das Koppelelement 6 weist eine zum Karosserielängsträger 2 hin weisende, erfindungsgemäß formkompatible Seitengeometrie 8 auf, ist also in diesem Bereich ebenfalls rechtwinklig ausgeführt. Es ergibt sich demzufolge zum Karosserielängsträger 2 ein formschlüssiger Eingriff, was eine einfache und auch eine gute Kraftaufnahme ermöglichende Befestigung des Koppelelements 6 am Karosserielängsträger 2 ermöglicht.

Im gezeigten Ausführungsbeispiel weist das Koppelelement 6 insgesamt eine L-Form auf, was dazu führt, dass an der anderen Seite eine entsprechende zweite Seitengeometrie 9 ausgebildet ist, die wiederum formkompatibel zur Seitengeometrie 10 des Batteriegehäuselängsträgers 5 ist, auch dieser ist L-förmig ausgeführt. Es stehen sich also quasi zwei Falzgeometrien gegenüber, die, wie Fig. 1 ersichtlich zeigt, ineinander eingreifen.

Das Koppelelement 6 weist erfindungsgemäß zwei unterschiedliche Seitengeometrien 8, 9 auf, die jeweils auf die entsprechende Anbindungsgeometrie 7 beziehungsweise 10 des Karosserielängsträgers 2 respektive des Seitenschwellers sowie des Batteriegehäuselängsträgers 5 abgestellt ist, so dass der in Fig. 1 gezeigte Batteriegehäuselängsträger 5, dessen Seitengeometrie 10 nicht zur Aufnahmegeometrie 7 des Karosserielängsträger 2 passt, trotz allem daran angebunden respektive abgestützt werden kann.

Fig. 2 zeigt ein zweites Ausführungsbeispiel eines erfindungsgemäßen Kraftfahrzeugs 1 in einer Teilansicht mit dem Karosserielängsträger 2, der Batterie 3 mit dem Batteriegehäuselängsträger 5 und dem Koppelelement 6. Ersichtlich weist hier das Koppelelement 6 und der Karosserielängsträger 2 wiederum formkompatible, rechtwinklige Aufnahmegeometrien respektive Seitengeometrien 7, 8 auf, ähnlich wie in Fig. 1, jedoch ist hier das Koppelelement 6 etwas größer dimensioniert als beim Ausführungsbeispiel gemäß Fig. 1.

Eine andere Geometrie weist auch der Batteriegehäuselängsträger 5 auf, wobei er auch hier grundsätzlich eine L-Form aufweist. Jedoch unterscheiden sich auch hier die Seitengeometrie 9 des Koppelelements 6 und die Seitengeometrie 10 des Batteriegehäuselängsträgers 5 etwas, verglichen mit dem Ausführungsbeispiel gemäß Fig. 1. Unabhängig davon ergibt sich auch hier jedoch sowohl zum Karosserielängsträger 2 als auch zum Batteriegehäuselängsträger 5 ein formschlüssiger Eingriff seitens des Koppelelements 6. Wiederum kann, wie Fig. 2 zeigt, ein von der Geometrie her eigentlich nicht passendes Batteriegehäuse 4 respektive ein Batteriegehäuselängsträger 5 an einen Karosserielängsträger 2 anderer Geometrie angebunden werden.

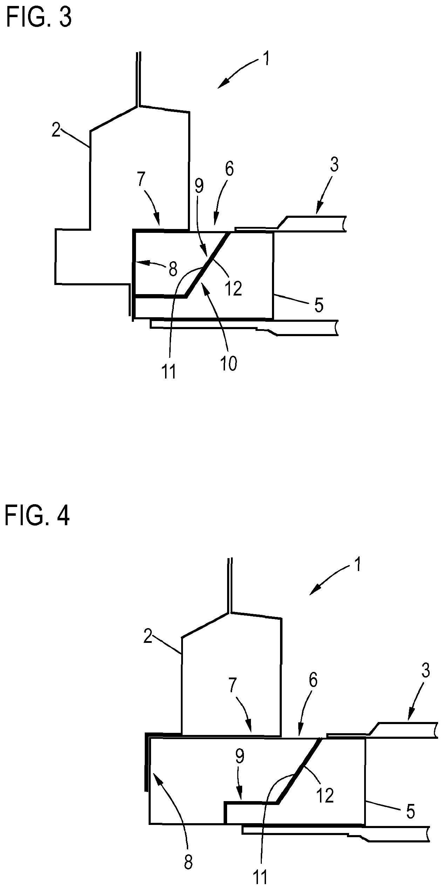

Fig. 3 zeigt ein Ausführungsbeispiel einer Teilansicht eines Kraftfahrzeugs 1 mit einem Karosserielängsträger 2 und einer Batterie 3, bei der am Koppelelement 6 eine Gleitschrägfläche 11 vorgesehen ist. Ebenso weist der Batteriegehäuselängsträger 5 eine Gleitschrägfläche 12 auf, die in der Montagestellung benachbart zur Gleitschrägfläche 11 angeordnet ist. Der Batteriegehäuselängsträger 5 ist auch hier L-förmig ausgeführt und weist demzufolge auch hier eine entsprechende Seitengeometrie 10 auf, die der Seitengeometrie 9 des Koppelelements 6 entspricht. Die Aufnahmegeometrie 7 des Karosserielängsträgers 2 und die Seitengeometrie 8 des Koppelelements 6 sind wie bereits bezüglich der Figuren 1 und 2 beschrieben.

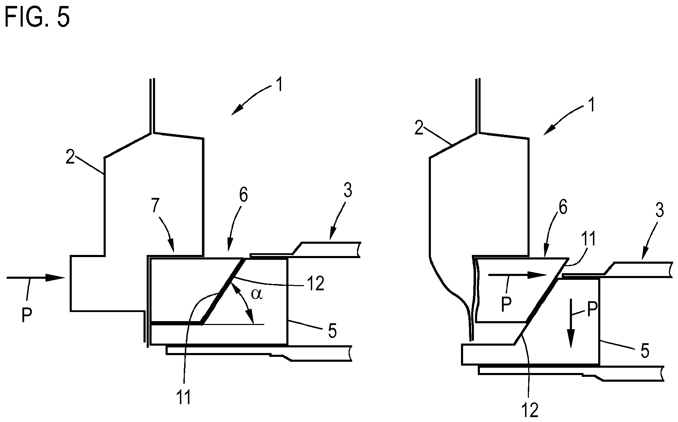

Die beiden Gleitschrägflächen 11, 12 ermöglichen im Crashfall ein Abgleiten aufeinander, worauf nachfolgend in Verbindung mit Fig. 5 noch eingegangen wird.

Fig. 4 zeigt schließlich eine vierte Ausführungsform einer Teilansicht eines erfindungsgemäßen Kraftfahrzeugs mit Karosserielängsträger 2, Batterie 3 mit Batteriegehäuselängsträger 5 und Koppelelement 6, wobei sich hier die Aufnahmegeometrie 7 des Karosserielängsträgers 2 deutlich von dem bisher beschriebenen Ausführungsformen unterscheidet. Sie ist zwar wiederum exemplarisch rechtwinklig, jedoch deutlich breiter verglichen mit den vorstehend beschriebenen Ausführungsbeispielen.

Da bei diesem Ausführungsbeispiel der Batteriegehäuselängsträger 5 die gleiche Geometrie wie im Ausführungsbeispiel gemäß Fig. 3 hat, weist zwangsläufig das Koppelelement 6 eine deutlich andere Geometrie auf. Es ist auch hier im Wesentlichen L-förmig, jedoch deutlich breiter und mit dem Anbindungsbereich zum Karosserielängsträger 2 auch höher ausgeführt. Es weist eine entsprechende, im Wesentlichen rechtwinklige Seitengeometrie 8 auf, die zur Anbindung zum Karosserielängsträger 2 dient. Die Seitengeometrie 9 zeigt die L-Form, so dass auch hier wiederum ein formschlüssiger Eingriff zwischen Batteriegehäuselängsträger 5 und Koppelelement 6 gegeben ist.

Wie im Ausführungsbeispiel gemäß Fig. 3 weist das Koppelelement eine erste Gleitschrägfläche 11 und der Batteriegehäuselängsträger 5 eine zweite Gleitschrägfläche 12 auf, die im Crashfall aufeinander abgleiten können.

Die Ausführungsbeispiele gemäß der Figuren 3 und 4 zeigen, wie durch Variation der Geometrie des Koppelelements 6 ein gleicher Batteriegehäuselängsträger 5 an unterschiedliche Karosserielängsträger 2 angebunden werden kann.

Fig. 5 zeigt schließlich eine Prinzipdarstellung in Form zweier Ansichten zur Erläuterung des Abgleitvorgangs im Crashfall.

In der linken Figurhälfte ist das Kraftfahrzeug 1 entsprechend der Ausgestaltung gemäß Fig. 3 gezeigt. In der Montagestellung liegen die beiden Gleitschrägflächen 11, 12 aneinander an oder sind geringfügig voneinander beabstandet. Kommt es nun zu einem seitlichen Aufprall, wie durch den Pfeil P dargestellt ist, und zu einer entsprechend heftigen Verformung des Karosserielängsträgers 2, wie in Fig. 5 dargestellt, so wird das Koppelelement 6 etwas nach rechts verschoben, so dass dessen Gleitschrägfläche 11 auf der Gleitschrägfläche 12 des Batteriegehäuselängsträgers 5 aufläuft. Dieser erfährt hierdurch eine Kraftkomponente, die vertikal nach unten gerichtet ist, wie durch den Pfeil P2 dargestellt ist. Das heißt, dass für dieses Abgleiten eine gezielte Relativbewegung der Batterie 3 vertikal nach unten eingeleitet wird, so dass es zwischen dem deformierten Karosserielängsträger 2, also dem Schweller, und dem Batteriegehäuselängsträger 5, der ebenfalls geringfügig deformiert werden kann, zu einer Entzerrung in vertikaler Richtung kommen kann. Durch eine geeignete Steifigkeitsabstimmung der Steifigkeit des Koppelelements 6 und des Batteriegehäuselängsträgers 5 und eine entsprechende Einstellung des Winkels α, den beide Gleitschrägflächen 11, 12 aufweisen, kann die Horizontalkraftkomponente, dargestellt durch den Pfeil P2, entsprechend eingestellt beziehungsweise gesteuert werden. Die sich ergebende Kinematik wirkt sich positiv auf die resultierenden Energiespeichermodulintrusionen innerhalb der Batterie 3 aus, die durch das Weggleiten nach unten besser geschützt sind, so dass im Gehäuseinneren gegebenenfalls weniger Schutz- oder Versteifungselemente vorgehalten werden müssen, was sich gewichtsreduzierend auswirkt.

Bei den beschriebenen Ausführungsbeispielen sind die gezeigten Koppelelemente 6 bevorzugt so lang wie die Batteriegehäuselängsträger 5, es handelt sich also bei den Koppelelementen ebenfalls um entsprechende längliche, einstückige Träger. Alternativ dazu ist es auch denkbar, mehrere kurze Koppelelemente beabstandet voneinander und hintereinander angeordnet zwischen die beiden Längsträger 2, 5 zu setzen, mithin also mehrere Abstütz- oder Anbindungspositionen zu schaffen.

Das oder die Koppelelemente sind bevorzugt aus Metall, insbesondere aus Aluminium, sie können aber auch aus einem Kunststoff oder einem faserverstärken Kunststoff gefertigt sein, oder aus einem Kompositmaterial, was eine Gewichtsersparnis ermöglicht.

## Patentansprüche

1. Kraftfahrzeug umfassend eine Karosserie mit zwei Karosserielängsträgern (2) sowie wenigstens eine zwischen den Karosserielängsträgern (2) angeordnete Batterie (3) mit einem Batteriegehäuse (4) umfassend zwei Batteriegehäuselängsträger (5), wobei zwischen den Batteriegehäuselängsträgern (5) und den Karosserielängsträgern (2) jeweils wenigstens ein die beiden Längsträger (2, 5) koppelndes Koppelelement (6) angeordnet ist, wobei das oder jedes Koppelelement (6) eine erste und eine zweite Seitengeometrie (8, 9) aufweist, wobei die erste Seitengeometrie (8) und eine Aufnahmegeometrie (7) am jeweiligen Karosserielängsträger (2, 5) und die zweite Seitengeometrie (9) und eine Seitengeometrie (10) am jeweiligen Batteriegehäuselängsträger (5) formschlüssig ineinander greifen.

2. Kraftfahrzeug nach Anspruch 1,
**dadurch gekennzeichnet,**
**dass** das Koppelelement (6) länglich ist und parallel zu den beiden Längsträgern (2, 5) verläuft.

3. Kraftfahrzeug nach Anspruch 2,
**dadurch gekennzeichnet,**
**dass** das Koppelelement (6) zumindest so lang wie der jeweilige Batteriegehäuselängsträger (5) ist.

4. Kraftfahrzeug nach Anspruch 1,
**dadurch gekennzeichnet,**
**dass** im Bereich zwischen den beiden Längsträgern (2, 5) jeweils mehrere Koppelelemente (6) vorgesehen sind.

5. Kraftfahrzeug nach einem der vorangehenden Ansprüche,
**dadurch gekennzeichnet,**
**dass** das oder die Koppelelemente (6) und/oder der jeweilige Batteriegehäuselängsträger (5) einen im wesentlichen L-förmigen Querschnitt aufweisen.

6. Kraftfahrzeug nach einem der vorangehenden Ansprüche,
**dadurch gekennzeichnet,**
**dass** das oder jedes Koppelelement (6) eine Gleitschrägfläche (11) aufweist, die benachbart zu einer am Batteriegehäuselängsträger (5) ausgebildeten Gleitschrägfläche (12) liegt.

7. Kraftfahrzeug nach einem der vorangehenden Ansprüche,
**dadurch gekennzeichnet,**
**dass** das oder jedes Koppelelement (6) aus Metall, insbesondere Aluminium, oder einem Kunststoff, insbesondere einem faserverstärkten Kunststoff oder einem Kompositwerkstoff ist.

## Claims

1. Motor vehicle comprising a body with two body longitudinal members (2) and least one battery (3) arranged between the body longitudinal members (2) with a battery housing (4) comprising two battery housing longitudinal members (5), wherein at least one coupling element (6) coupling the two longitudinal members (2, 5) is arranged between the battery housing longitudinal members (5) and the body longitudinal members (2), wherein the or each coupling element (6) has a first and a second side geometry (8, 9), wherein the first side geometry (8) and a receiving geometry (7) on the respective body longitudinal member (2, 5) and the second side geometry (9) and a side geometry (10) on the respective battery housing longitudinal member (5) engage positively with one another.

2. Motor vehicle according to claim 1,
**characterised in that**
the coupling element (6) is elongated and extends parallel to the two longitudinal members (2, 5).

3. Motor vehicle according to claim 2,
**characterised in that**
the coupling element (6) is at least as long as the respective battery housing longitudinal member (5).

4. Motor vehicle according to claim 1,
**characterised in that**
a plurality of coupling elements (6) are provided in the region between the two longitudinal members (2, 5).

5. Method according to any one of the preceding claims,
**characterised in that**
the coupling element or elements (6) and/or the respective battery housing longitudinal member (5) have a substantially L-shaped cross-section.

6. Method according to any one of the preceding claims,
**characterised in that**
the or each coupling element (6) has a sliding inclined surface (11) which is adjacent to a sliding inclined surface (12) formed on the battery housing longitudinal member (5).

7. Method according to any one of the preceding claims,
**characterised in that**
the or each coupling element (6) is made of metal, in particular aluminum, or a plastic, in particular a fiber-reinforced plastic or a composite material.

## Revendications

1. Véhicule à moteur comprenant une carrosserie avec deux supports longitudinaux de carrosserie (2), ainsi qu'au moins une batterie (3) disposée entre les supports longitudinaux de carrosserie (2) avec un boîtier de batterie (4) comprenant deux supports longitudinaux de boîtier de batterie (5), dans lequel respectivement au moins un élément de couplage (6) couplant les deux supports longitudinaux (2, 5) est disposé entre les supports longitudinaux de boîtier de batterie (5) et les supports longitudinaux de carrosserie (2), dans lequel le ou chaque élément de couplage (6) présente une première et une seconde géométries latérales (8, 9), dans lequel la première géométrie latérale (8) et une géométrie de réception (7) au niveau du support longitudinal de carrosserie (2, 5) respectif et la seconde géométrie latérale (9) et une géométrie latérale (10) au niveau du support longitudinal de boîtier de batterie (5) entrent en prise l'une avec l'autre par complémentarité de formes.

2. Véhicule à moteur selon la revendication 1,
**caractérisé en ce que**
l'élément de couplage (6) est de forme oblongue et s'étend parallèlement aux deux supports longitudinaux (2, 5).

3. Véhicule à moteur selon la revendication 2,
**caractérisé en ce que**
l'élément de couplage (6) est au moins aussi long que le support longitudinal de boîtier de batterie (5) respectif.

4. Véhicule à moteur selon la revendication 1,
**caractérisé en ce que**
respectivement plusieurs éléments de couplage (6) sont prévus dans la zone comprise entre les deux supports longitudinaux (2, 5).

5. Véhicule à moteur selon l'une quelconque des revendications précédentes,
**caractérisé en ce que**
l'élement ou les éléments de couplage (6) et/ou le support longitudinal de boîtier de batterie (5) respectif présentent une section transversale sensiblement en forme de L.

6. Véhicule à moteur selon l'une quelconque des revendications précédentes,
**caractérisé en ce que**
l'élément ou chaque élément de couplage (6) présente une surface inclinée de coulissement (11) qui est adjacente à une surface inclinée de coulissement (12) formée sur le support longitudinal de boîtier de batterie (5).

7. Véhicule à moteur selon l'une quelconque des revendications précédentes,
**caractérisé en ce que**
l'élément ou chaque élément de couplage (6) est fabriqué à partir d'un métal, en particulier d'aluminium ou d'une matière plastique, en particulier d'une matière plastique renforcée par des fibres ou d'un matériau composite.
